(19) **Europäisches Patentamt**

**European Patent Office**

**Office européen des brevets**

(11) Numéro de publication : **0 359 602 B1**

(12) **FASCICULE DE BREVET EUROPEEN**

(45) Date de publication du fascicule du brevet :
**22.07.92 Bulletin 92/30**

(51) Int. Cl.⁵ : **F16B 5/01**

(21) Numéro de dépôt : **89402160.9**

(22) Date de dépôt : **28.07.89**

(54) **Organe de liaison pour panneaux.**

(30) Priorité : **25.08.88 FR 8811221**

(43) Date de publication de la demande :
**21.03.90 Bulletin 90/12**

(45) Mention de la délivrance du brevet :
**22.07.92 Bulletin 92/30**

(84) Etats contractants désignés :
**DE ES GB IT NL SE**

(56) Documents cités :
**EP-A- 0 011 026**
**DE-U- 7 833 259**
**DE-U- 8 618 002**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Brochard, Jean Pierre**
**8, Bld. St Charles**
**06110 Rocheville-le-Cannet (FR)**
Inventeur : **Massoni, Jean Alain**
**L'Abodie-Villa 31 11 Chemin des Gourguettes**
**F-06150 Cannes La Bocca (FR)**
Inventeur : **Laithier, Pierre**
**91, avenue St Augustin**
**06200- Nice (FR)**

(74) Mandataire : **Bonnetat, Christian**
**CABINET BONNETAT 23, Rue de Léningrad**
**F-75008 Paris (FR)**

## Description

La présente invention concerne un organe de liaison pour panneaux notamment à couches multiples ou analogues.

Plus particulièrement, quoique non exclusivement, l'organe de liaison selon l'invention est avantageusement approprié à l'assemblage des bords de panneaux, dénommés par les techniciens "panneaux sandwich" et qui comportent une âme centrale présentant, par exemple, une structure dite en nid d'abeille recouverte sur ses faces par des plaques, encore appelées semelles.

Une application préférentielle de ces organes de liaison concerne le domaine spatial et, plus précisément, la liaison des panneaux sandwich des satellites artificiels et/ou la fixation d'équipement spécifique à un panneau.

Les organes de liaison actuellement utilisés sont généralement constitués de pièces rapportées, appelées inserts, qui sont intégrées dans le panneau au moment même de sa fabrication. Cette conception de réalisation, bien que très largement adoptée par les fabricants, implique toutefois des inconvénients.

Tout d'abord, il est nécessaire, d'une part de définir préalablement l'emplacement de chaque insert à rapporter dans le panneau, et, d'autre part, de concevoir des outillages spécifiques pour le positionnement desdits inserts afin de les maintenir en place lors de la réalisation du panneau, ce qui entraîne, du fait de l'étude et de la fabrication desdits outillages, une augmentation des coûts de production des panneaux, et, du fait de l'emplacement pré-établi des inserts, l'impossibilité de modifier éventuellement leur emplacement dans le panneau.

Par ailleurs, ces inserts, rapportés pendant la fabrication même du panneau qui s'effectue par collage à chaud des semelles sur la structure en nid d'abeille, sont également collés à chaud à l'aide d'un adhésif approprié sur les parois des perçages ménagés dans les semelles et la structure du panneau. Par conséquent, lorsque les inserts présentent notamment une longueur importante correspondant sensiblement à celle de l'épaisseur du panneau et lorsque la nature des matériaux utilisés pour l'insert, les semelles, et la-structure en nid d'abeille est différente, des problèmes de dilatation différentielle apparaissent entre les matériaux utilisés, du fait qu'ils présentent chacun son propre coefficient de dilatation thermique.

On remarquera que le document EP-A-0 011 026 décrit un insert pouvant être rapporté après fabrication du panneau. Cependant, un tel insert comporte plusieurs pièces différentes, de sorte que sa structure et ses coûts de fabrication et de pose sont élevés.

La présente invention a pour objet de pallier les inconvénients mentionnés ci-dessus et concerne un organe de liaison pour panneaux, notamment à couches multiples, dont la conception permet d'éviter l'utilisation d'outillages spécifiques pour son adaptation à un panneau, tout en supprimant les problèmes inhérents aux différences de dilatation thermique des matériaux, et qui présente une bonne tenue mécanique, une faible masse, et des coûts de fabrication et de pose réduits.

A cet effet, l'organe de liaison pour panneaux notamment à couches multiples, du type comportant au moins une âme centrale recouverte par des plaques, est caractérisé, selon l'invention, en ce qu'il comprend au moins deux plaquettes de forme oblongue, parallèles entre elles en étant reliées l'une à l'autre par une patte de liaison transversale, et qui sont destinées à venir s'ajuster par leurs faces internes respectivement sur les plaques dudit panneau, chacune desdites faces internes présentant au moins un évidement susceptible d'être rempli, grâce a un orifice ménagé dans la plaquette et débouchant dans ledit évidement, par un adhésif liant alors ladite plaquette à la plaque correspondante, tandis que la face externe de chaque plaquette présente des nervures grâce auxquelles chacune desdites plaquettes, même soumise à des efforts orthogonaux audit panneau, s'applique sensiblement uniformément contre la plaque correspondante dudit panneau, et en ce que des moyens de fixation à un dispositif extérieur sont prévus dans ladite patte de liaison.

Ainsi, grâce à l'invention, une pluralité d'organes de liaison peuvent être répartis sur les bords d'un panneau après la réalisation de celui-ci, et non plus dans le panneau même lors de sa fabrication. Les plaquettes de chaque organe s'ajustent, aux tolérances de fabrication près, sur les plaques dudit panneau, tandis que la patte de liaison de chaque organe peut venir au contact, par exemple, du chant du panneau. De la sorte, la conception de chaque organe permet de s'affranchir des outillages spécifiques préalablement utilisés, tout en offrant la possibilité d'être disposé en n'importe quel endroit de la périphérie dudit panneau, puisque l'incorporation de l'adhésif dans les évidements des plaquettes ne se fait qu'après avoir agencé lesdits organes à leurs emplacements choisis.

A ce propos, comme le collage de chaque organe sur le panneau s'effectue à froid et ne se fait que sur les plaques dudit panneau, après sa fabrication, les problèmes de dilatation thermique, préalablement évoqués, n'apparaissent plus.

On peut donc aisément relier un dispositif extérieur tel qu'un panneau adjacent par l'intermédiaire des moyens de fixation prévus à cet effet dans la patte de liaison desdites plaquettes, ou bien, un équipement spécifique directement fixé auxdits moyens de fixation.

Par ailleurs, selon un autre avantage procuré par ledit organe de liaison de l'invention, du fait que les faces externes des plaquettes présentent des nervures, celles-ci permettent notamment, lorsque le panneau est soumis à diverses sollicitations, de répartir les efforts sensiblement sur toute la surface des plaquettes, de sorte que les efforts tranchants s'exerçant alors sur l'âme centrale du panneau, telle qu'une structure en nid d'abeille, sont équilibrés.

Avantageusement, lesdites plaquettes oblongues sont agencées pour que leur grande dimension soit parallèle au bord dudit panneau. Dans une forme préférée de réalisation, la partie centrale desdites plaquettes présente, avec ladite patte de liaison transversale les reliant, une section en forme de U. Ainsi, le montage d'un organe de liaison sur le bord d'un panneau s'effectue sans difficulté puisqu' il consiste simplement en l'insertion des faces internes des plaquettes entre les plaques externes du bord du panneau, la distance séparant lesdites faces internes correspondant avantageusement, aux jeux fonctionnels près, à l'épaisseur dudit panneau.

Selon une autre caractéristique dudit organe de liaison, ledit évidement prévu dans la face interne de chaque plaquette peut se présenter sous la forme d'une rainure disposée suivant la grande dimension de la plaquette. Chaque rainure fait ainsi office de réservoir de produit adhésif. Cette réalisation permet ainsi d'introduire l'adhésif dans la rainure après que ledit organe a été correctement placé à l'emplacement souhaité.

Par ailleurs, les nervures ménagées sur la face externe de chaque plaquette peuvent présenter une forme de croix. Dans ce cas, avantageusement, lesdites nervures de chaque plaquette sont perpendiculaires entre elles, l'intersection desdites nervures étant située au centre de la face externe de chaque plaquette et chacune desdites nervures étant disposée suivant l'une desdites dimensions de ladite plaquette oblongue. Ainsi, grâce à cette disposition des nervures, les sollicitations, préalablement citées et auxquelles peut être soumis ledit panneau, se répartissent sensiblement, de façon optimale, sur toute la surface des deux plaquettes en étant transmises, via l'adhésif, de manière uniformément répartie et équilibrée, sur les plaques et la structure en nid d'abeille.

Selon une autre caractéristique de l'invention, lesdits moyens de fixation prévus dans ladite patte de liaison peuvent être constitués par au moins un trou taraudé. Ainsi, par exemple, une tige filetée liée à un support d'un équipement spécifique est alors simplement vissée dans ledit trou taraudé, un écrou ou analogue assurant le blocage de la liaison ainsi établie.

Par ailleurs, au moins un perçage ou analogue est prévu dans ladite patte de liaison, permettant d'alléger ledit organe de liaison ce qui est particulièrement intéressant pour le domaine spatial.

Avantageusement, lesdites plaquettes et la patte de liaison forment une pièce unitaire obtenue, par exemple, par moulage.

Les figures du dessin annexé feront bien comprendre comment l'invention peut être réalisée. Sur ces figures, des références identiques désignent des éléments semblables.

La figure 1 montre en perspective l'organe de liaison selon l'invention avant son montage sur le bord d'un panneau du type sandwich.

La figure 2 montre en perspective l'organe de liaison monté sur le bord dudit panneau.

La figure 3 est une coupe transversale de l'organe de liaison fixé au bord du panneau selon le plan de coupe III-III de la figure 2.

L'organe selon l'invention est destiné à permettre la liaison entre deux panneaux adjacents ou la liaison d'un équipement spécifique à un panneau.

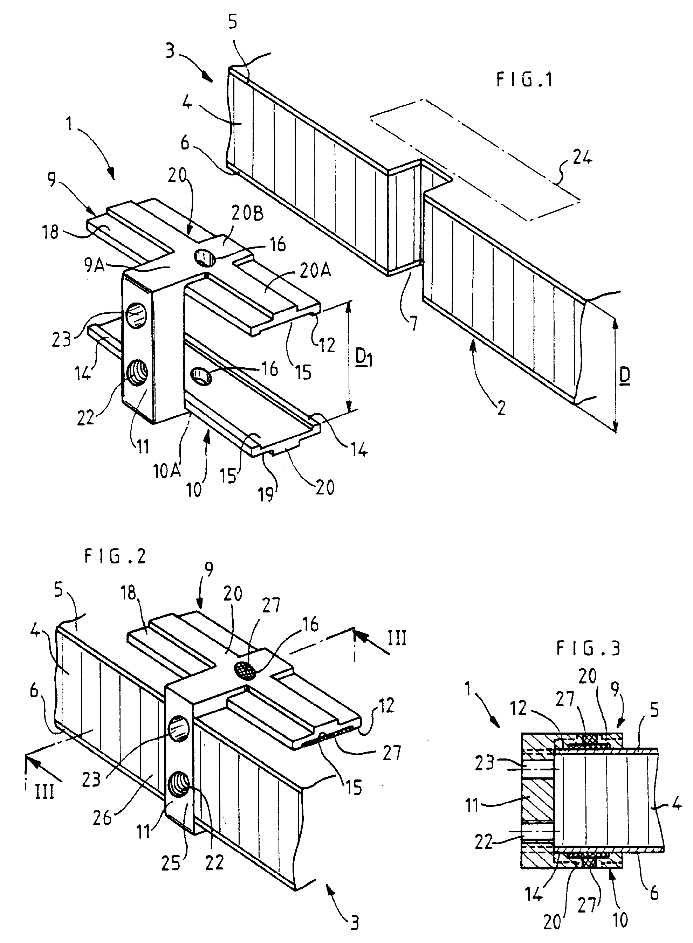

En se référant à la figure 1, l'organe de liaison 1 est destiné à être rapporté sur une partie du bord 2 d'un panneau 3 partiellement représenté. Ce panneau 3 est, dans ce cas, un panneau à couches multiples comprenant une âme centrale 4, telle qu'une structure en nid d'abeille, recouverte de part et d'autre par des plaques, respectivement 5 et 6, dénommées par la suite semelle supérieure pour la plaque 5 et semelle inférieure pour la plaque 6.

De plus, il est prévu dans le bord 2 du panneau sandwich 3, une encoche 7 dont la fonction sera explicitée ultérieurement et qui présente, dans ce mode de réalisation, une section en U. On a également désigné par la référence $D$ l'épaisseur dudit panneau 3.

L'organe de liaison 1, montré sur la figure 1, comprend deux plaquettes 9 et 10 de forme oblongue, parallèles entre elles et reliées l'une à l'autre par une patte de liaison transversale 11. Ces plaquettes 9 et 10 sont, dans le mode de réalisation illustrée, identiques et sont destinées, comme on le verra en regard des figures 2 et 3, à venir s'emboîter par leurs faces internes respectives 12 et 14 sur les semelles, respectivement supérieure 5 et inférieure 6 du panneau 3. Pour cela, la distance $D1$ séparant lesdites faces internes 12 et 14 est sensiblement identique à l'épaisseur $D$ du panneau 3.

Les plaquettes 9 et 10 et la patte de liaison 11 forment avantageusement une pièce unitaire obtenue, par exemple, par moulage, l'organe de liaison ainsi obtenu pouvant être réalisé en une matière métallique ou composite.

On voit sur la figure 1 que la partie centrale, respectivement 9A et 10A, des plaquettes 9 et 10 présente avec la patte de liaison 11 une section en forme de U destinée à épouser la partie correspondante du bord 2 du panneau 3. Les plaquettes oblongues 9 et 10 sont, de préférence, agencées pour que leur grande dimension soit parallèle au bord 2 dudit panneau.

Par ailleurs, les faces internes 12 et 14, respectivement des plaquettes 9 et 10, présentent chacune un évidement 15, tel que défini, dans cette exemple de réalisation, par une rainure prévue suivant la grande dimension des plaquettes. Un orifice 16, ménagé dans chaque plaquette 9 et 10, débouche dans la rainure correspondante 15. Ces rainures 15 sont destinées à faire office de réservoir pour un adhésif approprié qui sera, comme on le verra en regard des figures 2 et 3, introduit, par les orifices 16, dans les rainures 15.

Quant aux faces externes 18 et 19, respectivement des plaquettes 9 et 10, elles présentent chacune des nervures 20 agencées en saillie par rapport auxdites faces externes. Les nervures 20, notamment visibles sur la face externe 18 de la plaquette 9, sont agencées sous forme de croix et elles sont disposées perpendiculairement entre elles. Ainsi, l'intersection des nervures 20, prévue sur chaque plaquette, est située avantageusement au centre de la face externe 18 et 19, respectivement des plaquettes 9 et 10, lesdites nervures étant dirigées selon les deux dimensions de chaque plaquette oblongue. De cette façon, une nervure 20A est disposée suivant la grande dimension de chacune des plaquettes, tandis qu'une nervure 20B est prévue suivant la petite dimension desdites plaquettes.

Outre le fait qu'elles rigidifient les plaquettes, ces nervures 20 permettent aux plaquettes 9 et 10 de s'appliquer sensiblement uniformément sur la partie des semelles 5 et 6 qu'elles recouvrent, même lorsque le panneau est soumis à des sollicitations. Dans ce cas, sur la structure en nid d'abeille 4 s'appliquent des efforts équilibrés uniformément répartis, et non pas localisés ce qui risquerait d'écraser localement la structure en nid d'abeille.

Selon une autre caractéristique dudit organe 1, la patte de liaison transversale 11 est munie de moyens pour la fixation d'un dispositif extérieur, non représenté, tel que, par exemple, un panneau adjacent au panneau 3 ou un équipement spécifique audit panneau. Ces moyens sont, par exemple, constitués par un trou taraudé 22 ménagé dans ladite patte 11. Par ailleurs, afin d'alléger ledit organe de liaison, on peut prévoir un perçage 23 ou analogue dans ladite patte, ce qui est particulièrement avantageux dans le domaine spatial auquel sont plus spécifiquement destinés lesdits organes de liaison.

Enfin, on a représenté en traits mixtes interrompus la zone 24 de chaque partie des semelles 5 et 6 destinée à être collée par l'adhésif déposé dans les rainures 15.

Les figures 2 et 3 montrent l'organe de liaison 1 fixé au panneau 3. Bien entendu, on peut envisager une pluralité d'organes de liaison liés aux bords dudit panneau selon les besoins.

On voit ainsi, sur ces figures, l'intérêt de l'encoche 7 ménagée dans le bord 2 du panneau 3 et qui permet de positionner et de maintenir l'organe de liaison 1. La patte de liaison 11, dont la section correspond sensiblement à celle de l'encoche, s'emboîte alors parfaitement dans l'encoche 7, de façon que la face externe 25 de la patte prolonge le chant 26 du panneau 3, en ne faisant ainsi pas saillie vers l'extérieur. Le positionnement de ces encoches est déterminé en fonction de l'emplacement choisi desdits organes de liaison, mais lesdites encoches peuvent ne pas être forcément nécessaires.

La mise en place de l'organe de liaison 1 sur le bord du panneau 3 s'effectue aisément, les faces internes 12 et 14 des plaquettes 9 et 10 venant affleurer les parties correspondantes des semelles 5 et 6 puisque la distance $D1$ séparant lesdites faces internes est sensiblement égale, au jeu près, à l'épaisseur $D$ du panneau 3. Lorsque l'organe 1 est convenablement engagé dans le bord du panneau, l'adhésif 27 peut alors être introduit dans les orifices 16 ménagés dans les plaquettes 9 et 10, ledit adhésif s'écoulant ensuite dans les rainures 15 prévues dans les faces internes 12 et 14 des plaquettes. Après séchage à température ambiante de l'adhésif 27, l'organe de liaison 1 est alors solidarisé par les plaquettes 9 et 10 au panneau 3.

De ce qui précède, il ressort que l'organe de liaison, de par sa conception simple, présente une faible masse, une bonne tenue mécanique et sa production, ainsi que sa pose, ne posent pas de difficulté. De plus, il permet d'éviter, d'une part, l'emploi d'outillages spécifiques complexes et coûteux, et d'autre part, puisqu' il est collé à froid uniquement sur les semelles externes dudit panneau après sa réalisation, les problèmes de dilatation thermique. Par ailleurs, lesdites nervures autorisent le transfert des efforts sur le panneau de façon sensiblement répartie et équilibrée. Enfin, l'organe de liaison selon l'invention, outre le fait qu'il permet de lier, par exemple, deux panneaux adjacents entre eux, ou, un équipement spécifique audit panneau, peut être rapporté à un panneau comportant des pièces traditionnellement rapportées pour réparer, par exemple, un tel panneau.

**Revendications**

1. Organe de liaison pour panneaux notamment à couches multiples, du type comportant au moins une âme centrale recouverte par des plaques, caractérisé en ce qu'il comprend au moins deux plaquettes (9,10) de forme oblongue, parallèles entre elles en étant reliées l'une à l'autre par une patte de liaison transversale (11), et qui sont destinées à venir s'ajuster par leurs faces internes (12,14) respectivement sur les plaques (5,6) dudit panneau (3), chacune desdites faces internes présentant au moins un évidement (15) susceptible d'être rempli, grâce à un orifice (16) ménagé dans la plaquette et débouchant dans ledit évidement, par un adhésif liant alors ladite plaquette à la plaque correspondante, tandis que la face externe (18,19) de chaque plaquette présente des nervures (20) grâce auxquelles chacune desdites plaquettes (9,10), même soumises à des efforts orthogonaux audit panneau, s'applique sensiblement uniformément contre la plaque correspondante (5,6) dudit panneau, et en ce que des moyens de fixation (22) à un dispositif extérieur sont prévus dans ladite patte de liaison (11).

2. Organe selon la revendication 1,
caractérisé en ce que la partie centrale (9A,10A) desdites plaquettes (9,10) présente, avec ladite patte de liaison transversale (11) les reliant, une section en forme de U.

3. Organe selon l'une des revendications 1 ou 2,
caractérisé en ce que ledit évidement prévu dans la face interne de chaque plaquette se présente sous la forme d'une rainure (5) disposée suivant la grande dimension de la plaquette (9,10).

4. Organe selon l'une des revendications 1 à 3,
caractérisé en ce que les nervures (20) ménagées sur la face externe de chaque plaquette (9,10) présentent une forme de croix.

5. Organe selon la revendication 4,
caractérisé en ce que lesdites nervures (20) de chaque plaquette sont perpendiculaires entre elles, l'intersection desdites nervures étant située au centre de la face externe (18,19) de chaque plaquette et chacune desdites nervures étant disposée suivant l'une desdites dimensions de ladite plaquette oblongue.

6. Organe selon l'une quelconque des revendications précédentes 1 à 5,
caractérisé en ce que lesdits moyens de fixation prévus dans ladite patte de liaison (11) sont constitués par au moins un trou taraudé (22).

7. Organe selon l'une quelconque des revendications 1 à 6,
caractérisé en ce qu'au moins un perçage (23) ou analogue est prévu dans ladite patte de liaison (11).

8. Organe selon l'une des revendications précédentes 1 à 7,
caractérisé en ce que lesdites plaquettes (9,10) et la patte de liaison (11) forment une pièce unitaire obtenue par moulage.

**Patentansprüche**

1. Verbindungsorgan für Platten, insbesondere Mehrschichtplatten mit mindestens einem zentralen, von Tafeln verdeckten Kern,
dadurch gekennzeichnet, daß es mindestens zwei längliche Scheiben (9, 10) umfaßt, welche zueinander parallel, miteinander durch einen quer angeordneten Verbindungssteg (11) verbunden und dazu bestimmt sind, mit ihren Innenflächen (12, 14) jeweils mit einer der Tafeln (5, 6) der genannten Platte (3) gefügt zu werden, wobei jede der genannten Innenflächen mindestens eine Vertiefung (15) aufweist, welche durch eine Öffnung (16) hindurch, die in der Scheibe angebracht ist und in die genannte Vertiefung mündet, mit einem Kleber gefüllt werden kann, welcher dann die genannte Scheibe mit der zugehörigen Tafel verbindet, während die Außenfläche (18, 19) jeder Scheibe Rippen (20) aufweist, dank welchen jede der genannten Scheiben (9, 10), selbst wenn sie Beanspruchungen ausgesetzt sind, welche zu der genannten Platte orthogonal sind, sich nahezu gleichförmig an die entsprechende Tafel (5, 6) der genannten Platte anlegt, und daß in dem genannten Verbindungssteg (11) Mittel (22) zur Befestigung an einer äußeren Vorrichtung vorgesehen sind.

2. Organ gemäß Anspruch 1,
dadurch gekennzeichnet, daß die Mittelteile (9A, 10A) der genannten Scheiben (9, 10) mit dem sie verbindenden, quer angeordneten Verbindungssteg (11) ein U-förmiges Profil bilden.

3. Organ gemäß Anspruch 1 oder 2,
dadurch gekennzeichnet, daß die genannte Vertiefung, welche in der Innenfläche jeder Scheibe vorgesehen ist, die Form einer Nut (15) aufweist, welche in der Längsrichtung der Scheibe (9, 10) angeordnet ist.

4. Organ gemäß einem der Ansprüche 1 bis 3,
dadurch gekennzeichnet, daß die auf der Außenfläche jeder Scheibe (9, 10) angebrachten Rippen (20) ein Kreuz bilden.

5. Organ gemäß Anspruch 4,
dadurch gekennzeichnet, daß die genannten Rippen (20) jeder Scheibe zueinander senkrecht sind, wobei der Schnittpunkt der genannten Rippen im Mittelpunkt der Außenfläche (18, 19) der jeweiligen Scheibe liegt und jede der genannten Rippen in einer der Hauptabmessungsrichtungen der genannten länglichen Scheibe angeordnet ist.

6. Organ gemäß einem der vorstehenden Ansprüche 1 bis 5,
dadurch gekennzeichnet, daß die genannten Befestigungsmittel, welche auf dem genannten Verbindungssteg (11) vorgesehen sind, aus mindestens einer Gewindebohrung (22) bestehen.

7. Organ gemäß einem der Ansprüche 1 bis 6,
dadurch gekennzeichnet, daß in dem genannten Verbindungssteg (11) mindestens eine Bohrung (23) oder dergleichen vorgesehen ist.

8. Organ gemäß einem der vorstehenden Ansprüche 1 bis 7,
dadurch gekennzeichnet, daß die genannten Scheiben (9, 10) und der Verbindungssteg (11) ein ungeteiltes Guß- oder Preßteil bilden.

**Claims**

1. Connection element for panels, particularly multi-layer ones, of the type comprising at least one central core covered by sheets,
characterized in that it comprises at least two small plates (9,10) of oblong shape, parallel to each other and connected to each other by a transverse connecting lug (11), and which are adapted to fit by their inner faces (12,14) on the respective sheets (5,6) of said panel (3), each of the inner faces presenting at least one recess (15) capable of being filled, thanks to an orifice (16) made in the small plate and opening in said recess, with an adhesive then bonding said small plate to the corresponding sheet, whilst the outer face (18,19) of each small sheet presents ribs (20) thanks to which each of said small plates (9,10), even subjected to efforts at right angles to said panel, is applied substantially uniformly against the corresponding sheet (5,6) of said panel, and in that means for fixing (22) to an outside device are provided in said connecting lug (11).

2. Connection element according to claim 1, characterized in that the central part (9A,10A) of said small plates (9,10) presents, with said transverse connecting lug (11), a U-section.

3. Connection element according to one of claims 1 or 2,
characterized in that said recess provided in the inner face of each small plate is in the form of a groove (5) disposed along the large size of the small plate (9,10).

4. Connection element according to one of claims 1 to 3,
characterized in that the ribs (20) made on the outer face of each small plate (9,10) are in the form of a cross.

5. Connection element according to claim 4,
characterized in that said ribs (20) of each small plate are perpendicular to one another, the intersection of said ribs being located at the centre of the outer face (18,19) of each small plate and each of said ribs being disposed along one of said sizes of said small oblong plate.

6. Connection element according to anyone of preceding claims 1 to 5,
characterized in that said fixing means provided in said connecting lug (11) are constituted by at least one tapped hole (22).

7. Connection element according to anyone of claims 1 to 6,
characterized in that at least one bore (23) or the like is provided in said connecting lug (11).

8. Connection element according to one of preceding claims 1 to 7,
characterized in that said small plates (9,10) and the connecting lug (11) form a unitary piece obtained by moulding.

FIG.1

FIG.2

FIG.3